# EUROPÄISCHE PATENTSCHRIFT

(11) **EP 1 523 383 B1**
(45) Veröffentlichungstag und Bekanntmachung des Hinweises auf die Patenterteilung: **09.01.2008**
(21) Anmeldenummer: 03738052.4
(22) Anmeldetag: 18.06.2003
(51) Int. Cl.: B05B 12/14, G01V 8/16

(54) **LACKIERANLAGE MIT EINEM SENSOR UND EINER EINRICHTUNG ZUR VERSORGUNG DES AUF HOHEM ELEKTRISCHEN POTENTIAL LIEGENDEN SENSORS MIT ELEKTRISCHER ENERGIE**
PAINT SHOP WITH A SENSOR AND A DEVICE FOR SUPPLYING WITH ELECTRIC ENERGY SAID SENSOR THAT HAS A HIGH ELECTRIC POTENTIAL
INSTALLATION DE PEINTURE AVEC UN CAPTEUR ET UN DISPOSITIF POUR ALIMENTER EN ENERGIE ELECTRIQUE LE CAPTEUR A POTENTIEL ELECTRIQUE ELEVE

(30) Priorität: 20.07.2002 DE 10233005
(43) Veröffentlichungstag der Anmeldung: 20.04.2005
(73) Patentinhaber: EISENMANN Lacktechnik GmbH & Co. KG, 71032 Böblingen (DE)
(72) Erfinder: UCAN, Aydin, 72634 Ludwigsburg (DE)
(74) Vertreter: Ostertag, Ulrich
(86) Internationale Anmeldenummer: PCT/EP2003/006399
(87) Internationale Veröffentlichungsnummer: WO 2004/009246

(56) Entgegenhaltungen:
- EP-A- 0 888 825
- EP-A- 1 319 439
- DE-B- 1 233 779
- US-A- 5 847 389
- US-A1- 2001 045 512

## Beschreibung

Die Erfindung betrifft Lackieranlage mit einem Sensor und einer Einrichtung zur Versorgung des auf elektrischem Potential liegenden Sensors mit elektrischer Energie.

In modernen Lackieranlagen werden zunehmend Applikationseinrichtungen eingesetzt, die mit Hilfe einer Hochspannungselektrode den von ihnen versprühten Lack ionisieren, sodaß dieser mit Hilfe elektrostatischer Kräfte auf die im allgemeinen auf Massepotential liegenden zu lackierenden Gegenstände gezogen wird. In derartigen Lackieranlagen werden häufig Sensoren benötigt, die sich auf demselben hohen elektrischen Potential wie die Applikationseinrichtung selbst befinden. Ein Beispiel eines derartigen Sensors ist ein Detektor, der die Anwesenheit eines den Lacktransport zur Applikationseinrichtung besorgenden Molches in der der Applikationseinrichtung benachbarten Molchstation feststellt. Diese Sensoren, die im allgemeinen elektrisch arbeiten, benötigen eine elektrische Stromversorgung. Dies stößt jedoch wegen des hohen Potentials, auf dem die Sensoren liegen, auf Schwierigkeiten.

Bei bekannten Lackieranlagen mit auf hohem Potential liegenden elektrischen Sensoren wurden diese aus Batterien gespeist. Diese hatten jedoch nur eine geringe Standzeit, so daß der Betrieb der Lackieranlage zum Austausch der Batterien häufig unterbrochen werden musste.

Aufgabe der vorliegenden Erfindung ist es, eine Lackiereinrichtung mit einem Sensor und einer Einrichtung der eingangs genannten Art zu schaffen, mit welcher die Lackieranlage auf lange Zeit ohne Wartungsunterbrechung betrieben werden kann.

Diese Aufgabe wird erfindungsgemäß dadurch gelöst, daß die Einrichtung umfasst:
a) eine Lichtquelle, die sich auf niedrigem elektrischem Potential, insbesondere Erdpotential befindet;
b) einen Lichtempfänger, in dem ein Lichtenergie in elektrische Energie umsetzender Wandler vorgesehen ist, der mit dem Sensor elektrisch verbunden ist und auf dem hohen Potential des Sensors liegt;
c) einen Lichtleiter, welcher die Lichtquelle mit dem Lichtempfänger verbindet.

Erfindungsgemäß wird also als Energiequelle, aus welcher der Sensor gespeist wird, eine Lichtquelle eingesetzt, die sich - galvanisch durch einen Lichtleiter von den Hochspannung führenden Komponenten getrennt - auf niedrigem Potential befinden kann. Im Lichtemfpänger wird das zugeführte Licht zurück in elektrische Energie umgewandelt, die zum Betrieb des Sensors verwendet wird.

Zweckmäßigerweise ist der Wandler eine Solarzelle; derartige Solarzellen sind heute preiswert erhältlich und haben eine verhältnismäßig gute Stromausbeute.

Der Lichtleiter kann von einem Bündel lichtleitender Fasern gebildet sein. Auch er besitzt auf diese Weise einen hohen Wirkungsgrad.

Die Verwendung von Lichtleitern, die aus einem Bündel von lichtleitenden Fasern gebildet sind, ermöglicht den Einsatz einer Ausgestaltung der Erfindung, bei welcher der Lichtempfänger ein Gehäuse aufweist, in dem benachbart einer Seitenwand eine lichtdurchlässige Platte angeordnet ist, in welche die Enden der Fasern des Lichtleiters eingeführt sind, wobei alle Innenwände des Gehäuses, soweit sie von dem Licht erreicht werden können, das von der lichtdurchlässigen Platte ausgeht, mit einem reflektierenden Belag versehen sind. Diese Ausgestaltung der Erfindung kommt ohne abbildende Elemente aus. Mit Hilfe der einzelnen Fasern des Lichtleiters und der lichtdurchlässigen Platte, in welche die Faserenden eingesteckt sind, wird eine flächige Lichtquelle erzeugt. Das von dieser ausgehende Licht wird an den reflektierenden Innenwänden des Gehäuses des Lichtempfängers so lange reflektiert, bis es schließlich auf die Solarzelle trifft und in elektrische Energie umgewandelt wird.

Die lichtdurchlässige Platte ist zweckmäßigerweise eine Kunststoffplatte, die zur Aufnahme der Faserenden leicht mechanisch bearbeitet werden kann.

Aus Kostengründen empfiehlt es sich, wenn der refklektierende Belag an den Innenwänden des Gehäuses des Lichtempfängers aus Aluminiumfolie besteht.

Alternativ kann der Lichtempfänger eine Kondensorlinse enthalten, welche das von der Stirnfläche des Lichtleiters ausgehende Licht im wesentlichen parallelisiert und so auf den Wandler führt. Auch in diesem Falle wird der Wandler großflächig und weitgehend homogen mit Licht ausgeleuchtet, was die Umwandlungseffizienz verbessert.

Ganz besonders bevorzugt wird diejenige Ausführungsform der Erfindung, bei welcher ein Akkumulator vorgesehen ist, der von der Spannung, die von dem Wandler erzeugt wird, ständig aufgeladen wird. Der Sensor wird also nur mittelbar, nämlich über den Umweg des energiespeichernden Akkumulators, aus der elektrischen Energie gespeist, die von dem Wandler erzeugt wird. Dadurch lassen sich konstantere Betriebsbedingungen für den Sensor erzielen; der Akkumulator ist praktisch ständig voll aufgeladen, so daß seine Lebensdauer sehr groß ist.

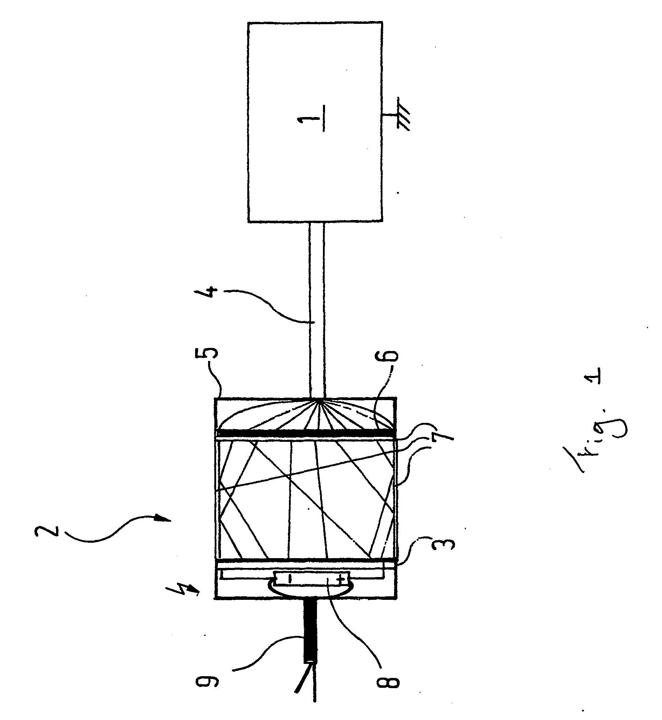

Die Erfindung wird nachfolgend anhand der Zeichnung näher erläutert. Die einzige Figur zeigt schematisch eine Einrichtung zur Versorgung eines auf hohem elektrischem Potential liegenden Sensors einer Lackieranlage.

Die Hauptkomponenten der dargestellten Einrichtung sind eine Lichtquelle 1, die mit einem Lichtempfänger 2 über einen aus einzelnen lichtleitenden Fasern zusammengesetzten Lichtleiter 4 verbunden ist. Der Lichtempfänger 2 besitzt ein Gehäuse 5, in welchem parallel zu derjenigen Seitenfläche, die von dem Lichtleiter 4 durchtreten wird, eine lichtdurchlässige, ggf. milchige, Kunststoffplatte 6 eingesetzt ist. Die Kunststoffplatte 6 erstreckt sich dabei über den gesamten Querschnitt des Gehäuses 5. Die Enden der Fasern des Lichtleiters 4 sind auseinandergeführt und in möglichst gleichmäßiger Verteilung in der lichtdurchlässigen Platte 6 befestigt.

Der lichtdurchlässigen Platte 6 gegenüberliegend, ebenfalls einer Seitenfläche des Gehäuses 5 benachbart, enthält das Gehäuse 5 eine als elektrischer Wandler dienende Solarzelle 3. Auch die Solarzelle 3 erstreckt sich über den gesamten Querschnitt des Gehäuses 5. Die Innenwände des Gehäuses 5 zwischen der lichtdurchlässigen Platte 6 und der Solarzelle 3 sind mit reflektierender Aluminiumfole 7 ausgekleidet.

In dem Zwischenraum zwischen derjenigen Seitenfläche des Gehäuses 5, die der Solarzelle 3 benachbart ist, und der Solarzelle 3 sind ein Akkumulator 8 und eine in der Zeichnung nicht dargestellte Ladeschaltung untergebracht. Der Ladeschaltung wird die Ausgangsspannung der Solarzelle 3 zugeführt; sie wandelt diese Ausgangsspannung in geeigneter Weise um und lädt den Akkumulator 8 ständig nach, so daß dieser immer annähernd vollgeladen ist. Der Akkumulator 8 seinerseits ist über ein Kabel 9 mit dem in der Zeichnung nicht dargestellten Sensor verbunden.

Der Lichtempfänger 2 befindet sich aufgrund der galvanischen Verbindung über das Kabel 9 auf demselben hohen elektrischen Potential wie der Sensor; die Lichtquelle 1 befindet sich auf Erdpotential.

Die oben beschriebene Einrichtung funktioniert wie folgt:

Die mit elektrischer Energie betriebene Lichtquelle 1 sendet über den Lichtleiter 4 Licht aus, das mit Hilfe der einzelnen Lichtleiterfasern und der Kunststoffplatte 6 zu einer flächigen Lichtquelle aufgefächert wird. Das von dieser flächigen Lichtquelle abgestrahlte Licht gelangt nach mehr oder weniger vielen Reflexionen auf die Solarzelle 3, die das Licht in elektrische Energie umwandelt. Diese wird von der Ladeschaltung zum Nachladen des Akkumulators 8 genutzt. Die über das Kabel 9 zur Versorgung des Sensors abgezogene elektrische Energie wird also im Akkumulator 8 kontinuierlich durch aus dem Licht der Lichtquelle 1 gewonnene elektrische Energie ersetzt. Da der Akkumulator 8 ständig voll aufgeladen ist, ist seine Lebenszeit außerordentlich hoch. Die Einrichtung kann über sehr lange Zeit betrieben werden, ohne daß Wartungsarbeiten an der Stromversorgung des Sensors durchgeführt werden müssen.

## Patentansprüche

1. Lackieranlage mit einem Sensor und einer Einrichtung zur Versorgung des auf hohem elektrischem Potential liegenden Sensors mit elektrischer Energie,
**dadurch gekennzeichnet, daß** die Einrichtung umfasst:
a) eine Lichtquelle (1), die sich auf niedrigem elektrischem Potential, insbesondere Erdpotential, befindet;
b) einen Lichtempfänger (2), in dem ein Lichtenergie in elektrische Energie umsetzender Wandler (3) vorgesehen ist, der mit dem Sensor elektrisch verbunden ist und auf dem hohen Potential des Sensors liegt;
c) einen Lichtleiter (4), welcher die Lichtquelle (1) mit dem Lichtempfänger (2) verbindet.

2. Lackieranlage nach Anspruch 1, **dadurch gekennzeichnet, daß** der Wandler (3) eine Solarzelle ist.

3. Lackieranlage nach Anspruch 1 oder 2, **dadurch gekennzeichnet, daß** der Lichtleiter (4) von einem Bündel lichtleitender Fasern gebildet ist.

4. Lackieranlage nach Anspruch 3, **dadurch gekennzeichnet, daß** der Lichtempfänger (2) ein Gehäuse (5) aufweist, in dem benachbart einer Seitenwand eine lichtdurchlässige Platte (6) angeordnet ist, in welche die Enden der Fasern des Lichtleiters (4) eingeführt sind, wobei alle Innenflächen des Gehäuses (5), soweit sie von dem Licht erreicht werden können, das von der lichtdurchlässigen Platte (6) ausgeht, mit einem reflektierenden Belag (7) versehen sind.

5. Lackieranlage nach Anspruch 4, **dadurch gekennzeichnet, daß** die lichtdurchlässige Platte (6) eine Kunststoffplatte ist.

6. Lackieranlage nach Anspruch 4 oder 5, **dadurch gekennzeichnet, daß** der reflektierende Belag aus Aluminiumfolie besteht.

7. Lackieranlage nach einem der Ansprüche 1 bis 3, **dadurch gekennzeichnet, daß** der Lichtempfänger eine Kondensorlinse enthält, welche das von der Stirnfläche des Lichtleiters ausgehende Licht im wesentlichen parallelisiert und so auf den Wandler führt.

8. Lackieranlage nach einem der vorhergehenden Ansprüche, **dadurch gekennzeichnet, daß** die Einrichtung einen Akkumulator (8) enthält, der von der Spannung, die von dem Wandler (3) erzeugt wird, ständig aufgeladen wird.

## Claims

1. Painting system with a sensor and a device for supplying electrical energy to the sensor which is at a high electrical potential, **characterised in that** the device comprises:
a) a light source (1) which is at a low electrical potential, in particular the earth potential;
b) a light receiver (2) in which a converter (3) converting light energy into electrical energy is provided, which is electrically connected to the sensor and is at the high potential of the sensor;
c) an optical waveguide (4) which connects the light source (1) to the light receiver (2).

2. Painting system according to claim 1, **characterised in that** the converter (3) is a solar cell.

3. Painting system according to claim 1 or 2, **characterised in that** the optical waveguide (4) is formed by a bundle of optical fibres.

4. Painting system according to claim 3, **characterised in that** the light receiver (2) comprises a housing (5) in which a transparent plate (6), into which the ends of the fibres of the optical waveguide (4) are fed, is arranged in the vicinity of a side wall, all the internal surfaces of the housing (5) which the light emerging from the transparent plate (6) can reach being provided with a reflective layer (7).

5. Painting system according to claim 4, **characterised in that** the transparent plate (6) is a plastic plate.

6. Painting system according to claim 4 or 5, **characterised in that** the reflective layer consists of aluminium foil.

7. Painting system according to one of claims 1 to 3, **characterised in that** the light receiver contains a converging lens by which the light emerging from the end face of the optical waveguide is essentially collimated and thus guided onto the converter.

8. Painting system according to one of the preceding claims, **characterised in that** the device contains an accumulator (8) which is constantly charged by the voltage being generated by the converter (3).

## Revendications

1. Installation de peinture avec un capteur et un dispositif pour alimenter en énergie électrique le capteur se trouvant à un potentiel électrique élevé,
**caractérisée en ce que** le dispositif comprend :
a) une source de lumière (1) qui se trouve à un potentiel électrique faible, en particulier au potentiel de la terre ;
b) un récepteur de lumière (2) dans lequel est prévu un transducteur (3) qui convertit l'énergie lumineuse en énergie électrique, qui est relié électriquement au capteur et qui se trouve au potentiel élevé du capteur ;
c) un guide de lumière (4) qui relie la source de lumière (1) au récepteur de lumière (2).

2. Installation de peinture selon la revendication 1, **caractérisée en ce que** le transducteur (3) est une cellule solaire.

3. Installation de peinture selon la revendication 1 ou 2, **caractérisée en ce que** le guide de lumière (4) est formé par un faisceau de fibres optiques.

4. Installation de peinture selon la revendication 3, **caractérisée en ce que** le récepteur de lumière (2) présente un boîtier (5) dans lequel, au voisinage d'une paroi latérale, est disposée une plaque translucide (6) dans laquelle sont introduites les extrémités des fibres du guide de lumière (4), toutes les parois intérieures du boîtier (5), dans la mesure où elles peuvent être atteintes par la lumière qui provient de la plaque translucide (6), étant pourvues d'un revêtement réfléchissant (7).

5. Installation de peinture selon la revendication 4, **caractérisée en ce que** la plaque translucide (6) est une plaque en matière plastique.

6. Installation de peinture selon la revendication 4 ou 5, **caractérisée en ce que** le revêtement réfléchissant est constitué d'une feuille d'aluminium.

7. Installation de peinture selon l'une des revendications 1 à 3, **caractérisée en ce que** le récepteur de lumière contient une lentille condensatrice qui parallélise essentiellement la lumière provenant de la face frontale du guide de lumière et la dirige ainsi sur le transducteur.

8. Installation de peinture selon l'une des revendications précédentes, **caractérisée en ce que** le dispositif contient un accumulateur (8) qui est chargé en permanence par la tension qui est générée par le transducteur.
